# EUROPEAN PATENT SPECIFICATION

(11) **EP 1 568 584 B1**
(45) Date of publication and mention of the grant of the patent: **06.06.2007**
(21) Application number: 05380005.8
(22) Date of filing: 11.01.2005
(51) Int. Cl.: B62J 39/00, B62J 6/00, B62J 3/00

(54) **Onboard computer-integrated lighting, signalling and position locating device for bicycles**
Bordcomputer für Fahrräder mit integrierter Beleuchtungs-, Signal- und Lokalisierungsvorrichtung
Dispositif d'éclairage, de signalisation et de localisation intégré à un ordinateur de bord pour bicyclettes

(30) Priority: 27.02.2004 ES 200400463
(43) Date of publication of application: 31.08.2005
(73) Proprietor: Eusko Xauen, S.L., 48013 Zorroza - Bilbao (ES)
(72) Inventor: Ochoa Monje, Ricardo, Zorroza Bilbao (Vizcaya) (ES)
(74) Representative: Riera Blanco, Juan Carlos

(56) References cited:
- EP-A- 1 381 021
- WO-A-20/04087490

## Description

### OBJECT OF THE INVENTION

The present specification relates to an application for an Invention patent corresponding to an onboard computer-integrated lighting, signalling and roadway-icon printing device for bicycles, especially in unfavourable lighting and visibility conditions, as disclosed in EP-A-1 381 021.

The invention incorporates functions of front lighting, indicator and brake light signalling, acoustic brake warning, horn and roadway-icon printing, all controlled by the user through a main control unit on the handlebars or stem.

The rear part includes another unit which aids and complements the front unit to perform all functions of the global system, the main control unit being provided with the possibility of being programmable, being able to perform other useful functions for the cyclist, such as showing him/her the pedalling speed and rate, thus resulting in a compact, multifunction device which resolves a large number of disparate requirements.

The power supply for the system comes from rechargeable batteries of small size and high energy density, which may be autonomously charged, by just connecting to a voltage transformer, not regulated conventionally.

### FIELD OF THE INVENTION

This invention is applicable in the industry of manufacturing auxiliary apparatus, devices and elements for cyclists.

### BACKGROUND OF THE INVENTION

The applicant has knowledge, as it belongs to him, of the file of the Utility Model applied for with number 200101432, published with number 1049352, regarding a presence signaller and indicator applicable on bicycles.

The applicant also has knowledge of the existence, at present, of a relatively large number of inventions all related to an isolated part thereof.

Nevertheless, both the document he owns, qualified to produce optical information on the surface of the ground whereon a cyclist passes or travels, as well as the files which are in some way related to the invention disclosed hereunder, do not include the synergetic interaction between them to facilitate a set of improved functions.

The applicant has knowledge of inventions which cover the front lighting, rear emergency signalling or speed display and other parameters, being simple, isolated elements and devices with limited functionality.

Nevertheless, the applicant does not have knowledge at present of an invention that has the characteristics of the invention disclosed hereunder.

### DESCRIPTION OF THE INVENTION

The onboard computer-integrated lighting, signalling and roadway-icon printing device for bicycles that the invention proposes, is configured as a multifunctional system for bicycles, whose main objective is to increase the cyclist's safety.

More specifically, the onboard computer-integrated lighting, signalling and roadway-icon printing device for bicycles object of the invention has the following parameters. Namely:
- Improving awareness of the cyclist on the roadway, by light and acoustic indicators, which act as a signalling system.
- Increasing the cyclist's field of vision in non-optimal light conditions.
- Informing of his/her presence on the road to other fast vehicles, which travel behind the cyclist at a distance which does not permit direct vision between the vehicle and the cyclist and, therefore, they can intercept the cyclist in a short period of time. Said presence information is transmitted to vehicles travelling behind by printing icons on the roadway, at the points the cyclist considers dangerous, as they are difficult for the vehicle driver to perceive the cyclist, such as brows of a hill, dangerous curves, tunnel entrances, etc. Said paint has the property of disappearing after the sufficient period of time to alert vehicles that they are travelling behind the bicycle.

In addition to the previous safety functions, the system can provide other convenient functions for the cyclist, such as those typical of a bicycle speedometer, in this way, the resources which implement the safety functions are taken advantage of to give greater use to the invention, thus resulting in a compact, multifunctional system whose volume, weight and cost is less than the sum of all the separate devices necessary to achieve the same set of functions.

### DESCRIPTION OF THE DRAWINGS

To complement the description being made and with the object of helping towards a better understanding of the characteristics of the invention, a set of drawings is attached, being an integral part of the present specification, wherein the following is represented with an illustrative, non-limiting character:
Figure number 1. It corresponds to an illustration of a bicycle wherein the invention is incorporated, corresponding to an onboard computer-integrated lighting, signalling and roadway-icon printing device for bicycles, being able to view in this graphic representation, the elements which are established in the front and rear areas of the bicycle body structure.
Figure number 2. It represents a block diagram of the object of the invention.
Figure number 3. It corresponds to a diagram of the invention that completes the object shown in figure number 1.
Figure number 4. It represents a front elevation view of the rear lighting unit.
Figure number 5. It corresponds to a perspective view of the device incorporated in the front area.

### PREFERRED EMBODIMENT OF THE INVENTION

In the light of these figures, it can be observed that the onboard computer-integrated lighting, signalling and roadway-icon printing device for bicycles is comprised of front unit (2) and a rear unit (40) fixed to the bicycle frame (1), the front unit (2) being fixed to the handlebars and the rear unit (40) being fixed to the emerging body of the bicycle frame forming the saddle support, the rear unit having a microcontroller, a data and command reception and transmission circuit with the front unit, an array of high-luminosity red light-emitting diodes for the rear signalling, two magnetic or optical-type sensors to measure pedalling speed and rate, a magnetic sensor or switch for brake detection, two smaller arrays of high-luminosity orange light emitting diodes for indicator signalling, a piezoelectric loudspeaker for acoustic warnings and its associated driver circuit, the icon printing subsystem and, optionally, an assembly of rechargeable batteries and their charging and associated voltage regulation circuit.

The front unit consists of a microcontroller, an array of high-luminosity white light-emitting diodes, a numerical, alphanumerical or graphic screen, a series of ergonomically positioned buttons, a data and command reception and transmission circuit with the rear unit and an assembly of rechargeable batteries and their charging and associated voltage regulation circuits.

The front light unit is an array of high-luminosity white light-emitting diodes, preferably between 6 and 10 units in a rectangular or elliptical arrangement, so that the width of the light-emitting diode array is several times greater than its height, thus achieving a more aerodynamic shape of the main control unit.

These diodes are actuated by means of a counter or general-purpose microcontroller output, appropriately connected to a transistor, which permits handling sufficient current for said light-emitting diodes.

By means of this assembly, it is possible to control the luminosity of the diodes by varying the working cycle of the square signal applied to it.

Another advantage of this assembly is that it achieves 10% more luminosity for the same energy consumption, as it acts on the light-emitting diodes with pulses.

This array of light-emitting diodes is assembled on a reflector, which directs and gives form to the light beam.

The reflector can, optionally, be positioned in a vertical direction, so that the strip of roadway one wants to light can be adjusted.

The array of light-emitting diodes, together with its reflector, is covered at its front by a transparent plastic material with a variable width in each part of its surface, so that it acts as a light beam-forming lens.

The light unit with which the rear unit is equipped is comprised of two light-emitting diodes in a linear configuration of one or two rows of diodes.

The orange diodes are positioned at the sides and the red ones in the centre.

They are also mounted on a reflector and covered by a translucent plastic material, optionally orange tinted for the indicator light area and red tinted for the brake light area.

The red light-emitting diodes have the function of acting as a warning or emergency light and as a brake indicator.

The warning light consists of the sequential lighting of the aligned diodes wherein one diode is lit whilst the others remain switched off, or in the intermittent lighting of all the diodes, or in medium luminosity lighting.

When the cyclist acts on the brake, the rear unit is informed of the braking event by a button or sensor mounted on the rear brake of the bicycle, which detects the movement of the clip.

The rear unit control system then stops driving the diodes in warning light mode and continuously lights them all at maximum luminosity, as well as driving the piezoelectric loudspeaker or transducer, if thus previously configured by the user.

The braking event can also be configured for its automatic detection without the brake switch, for this, the microcontroller code detects the sharp deceleration event together with the zero pedalling rate event.

In this way, a sharp deceleration event is implemented which can work simultaneously with the conventional brake detection, which may be of use to avoid falls in a pack when, for example, the team-mate in front stops pedalling or starts going up a steep slope.

The piezoelectric loudspeaker or transducer can also be manually used as an acoustic warning by the user, i.e. as a horn or bell, as well as an acoustic presence warning, i.e. to warn of the existence of a bicycle in the vicinity.

To perform this function, it emits a discrete but clearly perceptible whistle every few seconds in a radius of action of a few dozen metres.

This function can be manually or automatically disabled when the zero speed event is detected.

The piezoelectric loudspeaker or transducer is mounted inside the rear unit wherein there is a hole or set of holes whereby the sound progresses to the outside.

The driver circuit consists of a line booster and a switching transistor whose base is connected to a counter or general-purpose microcontroller output.

Thanks to the line booster circuit, a suitable sound intensity can be attained for the application we are concerned with.

The rear unit includes two magnetic or optical sensors to detect the rotations of the rear wheel and the cranksets, to extract the pedalling speed and rate information and send it to the main control unit to display it to the user.

Said two sensors are located encapsulated in the same housing, which is fixed on the right horizontal chainstay of the rear wheel so that, when the crankset is positioned horizontally, the pedalling rate sensor is opposite the internal face of the right crankset, and the rear wheel rotation sensor positioned towards the right side of the rear wheel.

In this way, the rate sensor can capture the magnetic signals produced by a magnet located on the internal face of the right crankset, and the rear wheel rotation sensor can capture the magnetic signals produced by another magnet located on a spoke of the rear wheel.

The system for printing icons on the roadway is controlled by rear unit microcontroller and is comprised of two tanks for the two paint components, another compressed air tank with a valve for conventional bicycle air to introduce air, an electrovalve for fluid, midget tubes, a mixing chamber and a deflector nozzle.

It is an air-free painting system, i.e. only paint exits through the deflector nozzle.

The compressed air of the tank is only used to exert pressure on the two paint components.

The paint and air tanks are located compactly together in the hollow on the bicycle frame just above the pedals.

The front and rear units are removable, i.e. they can easily be removed from their position.

Fixed brackets should be installed on the bicycle prior to its use, which are not necessary to uninstall to take the system to another place.

Both units are equipped with fastening elements to fixed bicycle brackets, which are integrated in their housings.

The fastening elements are attached to fixed brackets of the bicycles by sliding or coupling and rotation.

In both cases a safety tab prevents the unit from coming off.

The front unit is fixed at two points to the handlebars, one on each side of the point where the stem is attached to the handlebars.

The rear unit is fixed to the saddle post, so that the height with respect to the ground at which said rear unit is set can be adjusted by the final user.

The communication between the main control unit and the rear unit can be wired or wireless.

If the wired form is used, the wires are lead through the same location as the rear brake cable.

If the wireless form is used, the use of several technologies is possible: infrared, radiofrequency or ultrasound.

The parameters are transmitted from the rear unit to the front unit by a data packet, which includes a header with an operating code, followed by the body of the data packet, which contains the two tallies (the tally associated to pedalling and the one associated to speed) in predefined time units.

The commands transmitted from the front unit to the rear units are: left indicator, right indicator, icon printing on the roadway, horn and other warning light and brake sound configuration commands.

Each one of these commands has an associated command code.

The data packet to communicate these commands from the front unit to the rear unit includes a header with an operating code, followed by, the data packet body, which contains the command code.

As the user should perceive that command execution occurs in real time, the front unit does not have any waiting time before making the transmission, and the rear unit is continuously listening, to execute said command as soon as it is received.

To turn the wired system into a wireless one, it is necessary to include the transmitters and receivers of the chosen technology in the front and rear units.

Furthermore, it is necessary to include an equipment code just before the body of said data packet, so that adjacent equipment does not take this radiated information to be its own.

All the system functions are controlled from the main control unit located on the centre of the handlebars, beside the stem, and the parameters for which measuring means are included, are reflected on the screen.

The buttons included on said main control unit have a different function depending on the context, i.e. according to the state wherein the state machine implemented in the microcontroller code is found.

Furthermore, different functions are associated to long strokes and short strokes.

The interface between the microcontroller and the screen may be parallel, via a data bus and control signals, or serial, via an SPI port.

The screen, in a preferred implementation, is equipped with bias lighting, so that it is easily legible in any lighting condition.

Basically, there is a welcome screen, several parameter presentation screens and other additional configuration screens.

The welcome screen is displayed when starting to use the bicycle after a period of time of activity.

One of the parameter presentation screens is that which the main control unit presents in the typical system functioning.

Herein, all, or practically all, the parameters of interest for the client are simultaneously shown.

The invention, in a preferred embodiment, has between 4 and 7 keys, depending on the number of functions one intends to use by direct actuation, without entering in the menu.

In the parameter presentation mode, the keystrokes have the following functions:
- Short strokes: left indicator, right indicator, right indicator, horn and activating front light.
- Long strokes: paint icon printing and access to the configuration menu.

On pressing on the button associated to menu access, a list of options is shown, whereby the user can displace up and down, using the buttons, which were previously associated to the indicators.

The button whereby the menu was previously accessed now has another function using short stroke, to enter in the selected menu option.

Once inside the desired option, the up and down buttons are pressed to change the selected configuration parameter value.

The button, which in the parameter display mode was the horn, acquires the generic exit function in the menu, at whatever level of the menu the user is in.

The battery charging and supply voltage regulation circuit has the purpose of it being possible to use both Nickel-Metal Hydride and Lithium-Ion rechargeable batteries, as well as conventional batteries, whose nominal voltages are different.

In a preferred embodiment, said circuits are conceived for the use of Nickel-Metal Hydride rechargeable batteries of an appropriate, variable size, the voltage regulation circuit being capable of equally admitting both said rechargeable batteries and non-rechargeable batteries of appropriate size.

Furthermore, as a separate accessory, an adapter frame for the use of Lithium-Ion batteries can be used in this embodiment, as the charging subsystem also admits this type of batteries.

Said frame externally offers the form of assembly of 3 batteries of variable size, physically arranged in parallel beside one another, and has a hollow in the centre of its body where the Lithium-Ion battery is housed.

Both poles of the Lithium-Ion battery, as well as the thermistor terminal with which said batteries are provided, are connected by conductor wires to the appropriate contacts found in the battery compartment.

In another preferred embodiment, the rechargeable batteries used are Lithium-Ion, with a charging and regulation circuit specifically for this type of battery, the unit being formed by the charging subsystem and the battery of smaller weight and volume than in the previous preferred embodiment.

In a typical embodiment, magnetic and optical sensors to detect rotations of the rear wheel and of the cranksets are included, with the purpose of showing the cyclist information on the speed and pedalling rate via the screen.

Instantaneous, maximum and average values of said parameters are shown, as well as the time elapsed and the distance covered from the start of the journey, the time and, if the necessary sensors and subsystems are included, the pulse, the level of blood oxygen, the gradient and/or altitude and the bearing (electronic compass).

To calculate the average values in a journey, two modes of functioning are provided: continuous mode, wherein the time elapsed counter does not stop unless the user manually intervenes; and the automatic stoppage mode, wherein, when the cyclist stops for more than several seconds, the time counter stops, meaning that the average values freeze until movement is restarted.

The time which elapses between when the cyclist stops moving until the system interprets that a stop has occurred, in a preferred embodiment, is of 8 seconds from the last wheel rotation detected.

Said value is subtracted from the time elapsed counter when a stop occurs, so that the average calculation precision is not degraded, as the cyclist has not been in motion for those 8 seconds and, therefore, they should not be incorporated in the time elapsed value.

Due to the fact that the microcontroller and the front unit, in a preferred embodiment, is equipped with a flash memory (non-volatile) with sufficient capacity, the parameter record storage of several journeys can be implemented, to be subsequently displayed and analysed, both in a Personal Computer, and on the screen of the invention, if it is a graphic screen.

For this, the invention can be connected to a computer, if used together with a device connected to the serial or USB port of said Personal Computer.

To display said information on a personal computer, a user application program that shows the set of data stored during the journeys in legible format is necessary.

A series of alarms set off by the event of any parameter being outside a predefined range can be implemented in the main unit microcontroller code.

The parameters that are most interesting to monitor are the pedalling frequency, the pulse and the blood oxygen level.

The pedalling frequency is a very important detail to obtain good results in a training session.

The maximum and minimum pedalling frequency margins can automatically vary during the course of a training session in accordance with regulations configured by the user, so that a training program is achieved.

The heartbeat and blood oxygen level are conclusive data to know the athlete's state when performing the training.

Both parameters indicate if the athlete should increase or decrease his/her intensity to achieve objectives set within a training area or, even more important, if the intensity should be reduced so as not to overstrain.

Said training areas relate to zones of the heartbeat and blood oxygen values within which the athlete achieves different objectives.

Basically, three zones are defined, numbered in rising order for the heartbeat:
- Maintenance or warming up: the effort is aerobic and low intensity, recommended for warming up and older people.
- Aerobic resistance: wherein the effort continues to be aerobic, but greater intensity, so that it is resistance training.
- Anaerobic or performance increase: wherein the effort is anaerobic and a at percentage close to 100% of the athlete's maximum.

The alarms of the training level zone can be programmed so that they evolve throughout the training session, so that the athlete only has to follow the guidelines displayed on the screen and be aware of the acoustic alarm warnings without having to interact with the apparatus to successfully follow, step by step, a complete training session (warming-up, aerobic training, anaerobic series, cool down, etc).

In the case of series training, the duration of each phase can be programmed by time or distance.

This operating mode is very interesting in the case of stationary bikes, as it is the bicycle computer that can command the user to follow the pedalling rate and the posture he/she should adopt, as well as, using an electromechanical actuator, modify resistance.

With a series of some predefined and other customizable programs, one achieves a "virtual trainer" to progress in the objectives which the user wants to achieve.

To obtain information on the pulse and blood oxygen level, the integration of an oxymetry sensor and a miniaturized oximeter are required.

Said oximeter can be connected inside the main unit housing, communicating with this by wires, or, by contrast, be a wireless device.

If the oximeter is included within the front unit housing, an opening is included therein, from which the connector for the oximetry sensor emerges.

As it is wired transmission, the volume of data that can be transferred from the oximeter to the front unit microcontroller is greater than in the wireless case, so that even the electrocardiogram can be displayed onscreen.

In the case of wireless transmission, the oximeter should be connected to a low-consumption microcontroller and a RF transmitter, and the whole unit powered by a small size flat battery.

In relation to its location and physical form, it can be a wrist device accompanied by an oximetry sensor for the finger pads or, by contrast, it can be a device in the form of a band wherein a sensor is also integrated, and is located on the torso.

The rear unit is modular, being physically comprised of three bodies, described hereunder:
- Fastening element: it fastens the rear unit to the saddle post by two parts which are adapted to the circumference of that post and two to four screws to tighten said two parts.
- Sub-unit of the hydraulic system: it is the central body and houses part of the air-free paint system. It is comprised of three tanks, which contain paint, a reagent and compressed air. Furthermore, it also includes the midget tubes to interconnect tanks, as well as an air valve connected to the compressed air tank.
- Electronic system: it contains all the electronics which receives commands to act on indicators and the hydraulic system electrovalve and the lighting of the brake light and the acoustic warning, as well as for the acquisition of parameters and their transmission to the front unit.

These three bodies are assembled by complementary clamps in the form of guides embedded in the housings.

Between the central body and the body which houses the rear unit electronic system, there are contacts which are used to drive the electric signal to the central body, which acts on the normally closed electrovalve and the signal collected from the magnetic sensor of actuation on the rear brake.

The device, conceived in this way, is totally modular, permitting the inclusion or exclusion of the functions by appropriately selecting the necessary modules.

The user, according to the route planned, can remove or add the hydraulic system, e.g. to make a journey between forest paths without vehicular traffic, it is not necessary to use the painting of icons on the roadway, nevertheless, he/she may decide to use the brake light, indicator and acoustic warning system to perform group descents with greater safety.

The unit of the appropriately assembled electrovalve, the mixing microcamera and deflector nozzle, form the hydraulic unit assembly that, together with the rear unit central body, form the complete hydraulic system.

Said hydraulic sub-unit is positioned by means of a tab cut in a u-shape which fits in the outer part of the quick release of the rear wheel.

The central body of the rear unit and said electrovalve are interconnected with the two midget tubes and two conductor wires.

The midget tubes carry the pressurized paint and reagent, whilst the conductor wires serve to drive the electromagnetic or piezoelectric actuator in charge of opening the valve.

In the case of wireless implementation, a variant is considered to avoid having to wire from the rear electronic system to the speed and pedalling sensors.

Said variant consists of breaking down the rear unit in two rear sub-units, one of these units being that which, in previous paragraphs, has been called rear unit, except for the translation of some functions, and the necessary components to perform them, to the other part or complementary unit of the rear unit.

The components that do not form part of the primary rear unit are the two magnetic switches and the wireless transmitter.

The complementary rear unit of the former is located in the same place as the encapsulated unit of pedalling rate and wheel rotation sensors, with a very similar shape and size.

It performs the functions of capturing the rear wheel rotation speed and the pedalling rate and transmitting them to the front unit.

The rear unit is a single miniaturized part, integrating the speed and pedalling sensors, a control unit a RF transmitter and a long lasting battery.

It is located on the horizontal right chainstay of the rear wheel, so that by positioning the crankset horizontally, its internal face is opposite the external face of the complementary rear unit and, in this way, the complementary rear unit can capture the magnetic signals produced by a magnet on the internal face of the crankset, as well as the magnetic signals produced by another magnet situated on a spoke of the rear wheel.

Said complementary rear unit is in charge of collecting the speed and pedalling parameters as well as transmitting them to the front unit.

Returning to the example of the user who is going to make a journey over forest paths without vehicular traffic and decides that he/she does not need to use the brake light, indicator and acoustic warning system, he/she can completely remove the primary rear unit and the complementary rear unit automatically collects the speed and pedalling parameters so that the front unit can display them, together with the other information which have measuring subsystems.

The control unit of the complementary rear unit can be implemented by a low-cost microcontroller or with an application-specific integrated circuit (ASIC).

Said ASIC is internally comprised of two counters which count the time between the flanks of the two signals provided by the two sensors, two records to store said tallies and a FIFO memory of parallel input and serial output, to convert these data to serial formal and add the equipment code to it.

In this variant, the automatic braking detection should be implemented with modifications in relation to the version with a single rear unit.

In this case, the complementary rear unit is the one that detects the braking event, but it is the primary rear unit which drives the brake light-emitting diodes.

As the primary rear unit is not directly connected to the complementary rear unit, the deceleration event, together with the zero pedalling frequency, should be communicated from the complementary rear unit to the front unit, and from this to the complementary rear unit.

Taking advantage of the passing of said information through the front unit, the event can be shown onscreen as an icon or by inverting the pixels of the entire screen throughout the duration of the driving continuously from the brake light-emitting diodes.

In the light of the figures, it can be observed how the invention corresponding to an onboard computer-integrated lighting, signalling and roadway-icon printing device for bicycles is formed from a bicycle (1), which incorporates, on the handlebars, a control body (2) which coincides with the post which supports the saddle, incorporating a second body (40), with a body (2), with lighting and operating means of the invention, whilst the body (40) has the lighting elements and means of icon evacuation on the roadway surface.

In figure number 2, it is observed that the invention incorporates a microcontroller (3) connected to a serial port (4), a piezoelectric loudspeaker (5) connected to the microcontroller (3) by a connection (6), a valve driver circuit (7), a switch (8) for the left side, a switch (10) for the right side, as well as a brake light (9).

From the microcontroller (3) inputs (14) for the magnetic wheel sensor (12), and for the magnetic pedalling sensor (13) are produced, there is also a connection (15) for the magnetic brake sensor (11) from the microcontroller (3) emerging.

In figure number 3, we can also observe that the microcontroller (3) can be connected to the front lighting block (17) with the output (6), as well as to an oximeter (16), a GPS/GSM block (23), a serial interface parallel with the LCD screen (19), a keyboard (18), a timer (21), a gradient sensor (22) and a bearing sensor (20).

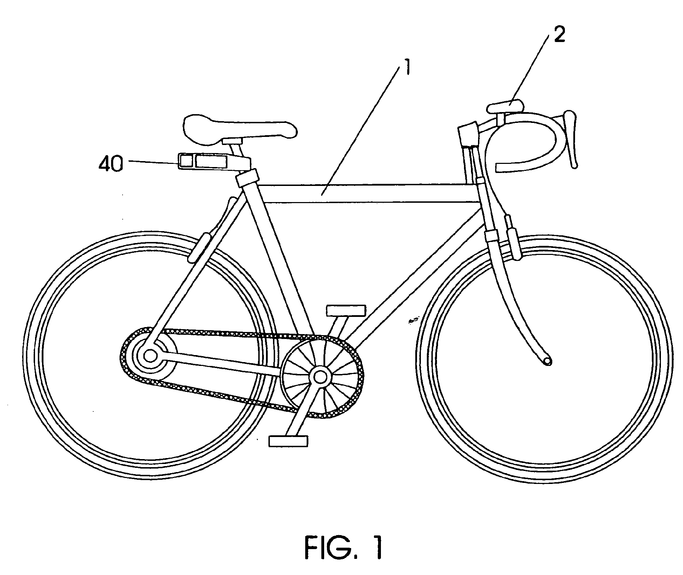

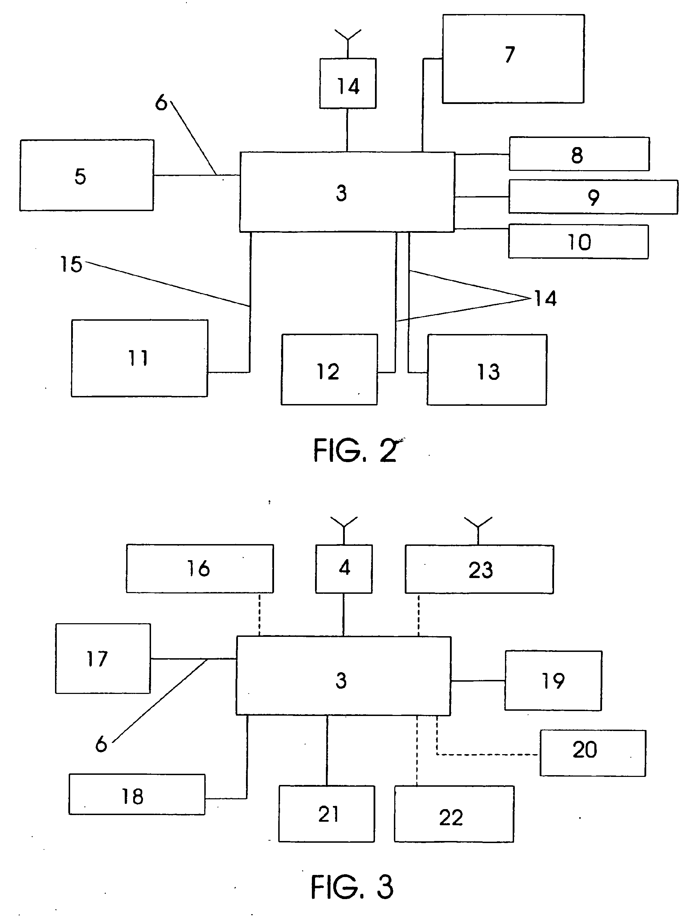

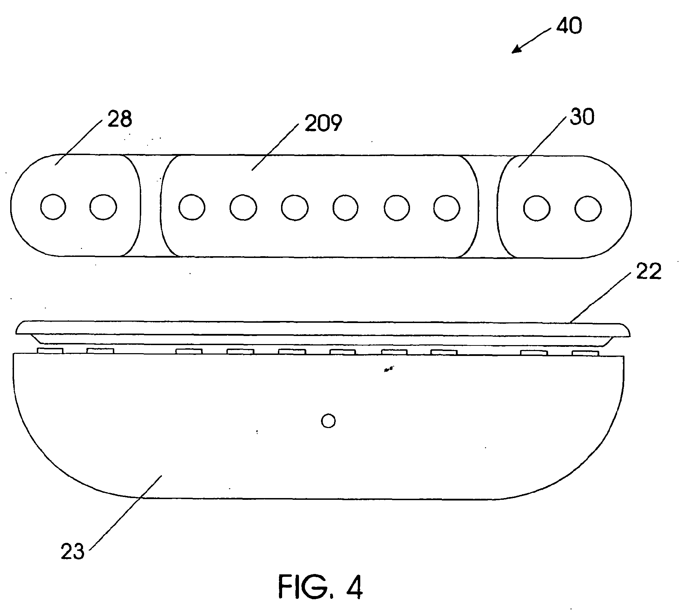

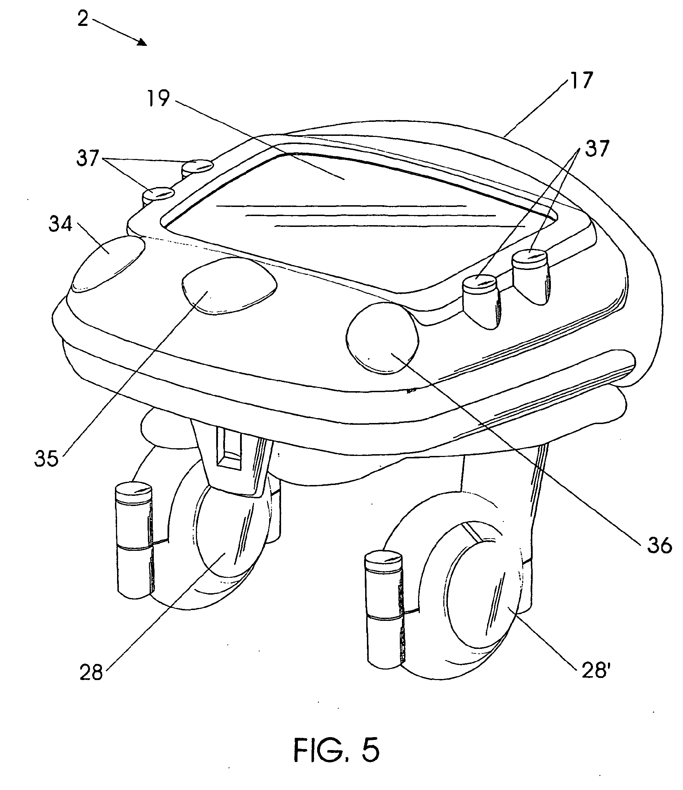

In figure 4 we can observe how said switches actuate the luminous leds incorporated with the colour amber (28) and (30) on the side, and in the central area (209), the leds are red.

The invention also has translucent material (22) and a warning bell (23) on the lower part.

Figure number 5 directly shows the physical configuration of the body of the unit (2) installed on the bicycle (1) handlebars, showing a screen (19), a spotlight (17), browsing keys (37), left indicator button (34), right indicator button (36), button (35) to actuate the paint icon and means (28) and (28') for its fastening, acting as support elements for its adaptation to the bicycle (1) surface.

## Claims

1. Onboard computer-integrated lighting, signalling and roadway-icon printing device for bicycles, said device incorporating a bicycle computer integrated with a safety system by means of acoustic and visual warning and signalling, comprising:
- a main front control unit situated on the handlebars of a bicycle (1), which incorporates a microcontroller (3), a keyboard (18), a numerical (19), alphanumerical or graphic screen, a front lighting subsystem configured by a spot light (17), based on high-luminosity light emitters, an assembly of rechargeable batteries, a battery charging and voltage supply regulation subsystem, and a data transmission subsystem,
- a rear unit (40) for warning and signalling and capturing the parameters to be displayed, which consists of a microcontroller (3) an array of magnetic sensors, an acoustic warning subsystem formed by a piezoelectric loudspeaker (4) and its associated driver circuit, a luminous brake and indicator warning subsystem, a visual warning hydraulic subsystem via paint, a rechargeable battery assembly, a battery charging and power supply regulation subsystem and a data transmission subsystem, the front unit (2) being controlled by the user and sending the indicator, icon printing, horn actuation and configuration commands to the rear unit (40) and this, in turn, sends the tally of the pedalling time and the rear wheel rotation to the front unit (2), the microcontroller (3) having connections to an RF block (4), to a valve driver circuit (7), to a left switch (8), to a brake light (9), to a right switch (10), counter input (14), to a magnetic pedalling sensor (13), to a magnetic wheel sensor (12), to a magnetic brake sensor (11) through a connection (15), the piezoelectric loudspeaker (5) being connected by outputs (6) to the microcontroller (3), the microcontroller (3) also having connections to an oximeter (16), to a GPS/GSM block (23), to the front lighting (17), to a keyboard (18), to a timer (21), to a gradient sensor (22) and to a bearing sensor (20), to a LCD screen (19).

2. Onboard computer-integrated lighting, signalling and roadway-icon printing device for bicycles, according to claim 1, **characterized in that** the body of the rear unit (40) incorporates amber-coloured diodes (28) and (30), amongst which red-coloured diodes (209) are positioned, having a translucent material (22) and a warning bell (23), the screen (19), incorporated in the body (2), having keys or buttons (34) on its perimeter to actuate the left indicator, and menu browsing keys or buttons (37), there being buttons (36) for the right indicator, as well as a paint icon button (35), and elements of fastening or support (28) and (28') to the bicycle (1).

3. Onboard computer-integrated lighting, signalling and roadway-icon printing device for bicycles, according to claim 1, **characterized in that** the transmission between the front (2) and rear (40) units is performed by wires and, one of the two units, the front (2) or the rear (40), is not provided with batteries, nor a charging and regulation circuit, but is powered by batteries from the other unit.

4. Onboard computer-integrated lighting, signalling and roadway-icon printing device for bicycles, according to claim 1, **characterized in that** transmission between the front (2) and rear (4) units is wireless, by infrared, RF or ultrasound transmitters and receivers and an equipment code is added to the data packet header to avoid adjacent equipment from taking the information radiated by another equipment to be its own.

5. Onboard computer-integrated lighting, signalling and roadway-icon printing device for bicycles, according to claim 1, **characterized in that** the hydraulic system for icon printing on the roadway, which disappears after a pre-established period, is removably assembled to the rest of the invention, the hydraulic system being formed by three airtight tanks, one of air, another of paint and another of reagent, as well as conduits, an electrovalve and a spray nozzle.

6. Onboard computer-integrated lighting, signalling and roadway-icon printing device for bicycles, according to claim 1, **characterized in that** the rear unit (40) has two units, one of them for parameter capture and the other to receive and execute the commands sent by the front unit (2).

7. Onboard computer-integrated lighting, signalling and roadway-icon printing device for bicycles, according to claim 1, **characterized in that** the rechargeable batteries used are Nickel-Metal Hydride batteries, the power regulation circuit being able to equally admit both said rechargeable batteries and conventional non-rechargeable batteries.

8. Onboard computer-integrated lighting, signalling and roadway-icon printing device for bicycles, according to claim 1, **characterized in that** the rechargeable batteries used are Lithium-Ion batteries, with a charging and regulation circuit specifically for this type of battery, the unit being formed by the charging subsystem and the battery of less weight and volume.

9. Onboard computer-integrated lighting, signalling and roadway-icon printing device for bicycles, according to claim 6, **characterized in that** the variant of the wireless embodiment wherein the rear unit is physically broken down in two units, is suitably used to capture the pedalling rate and the rotation speed of the rear wheel and wireless transmission to the front unit (2) to be displayed on the screen.

## Patentansprüche

1. Bordeigene computerintegrierte Vorrichtung für Fahrräder, zur Beleuchtung, zur Signalisierung und zum Drucken von Straßensymbolen, wobei diese Vorrichtung einen Fahrradcomputer inkorporiert, der mit einem Sicherheitssystem integriert ist, mittels einer akustischen und visuellen Warnung und Signalisierung, die Folgendes umfasst:
eine hauptsächliche vordere Steuerungseinheit, die sich auf der Lenkstange eines Fahrrads (1) befindet, welche einen Mikrocontroller (3), eine Tastatur (18), einen numerischen (19), einen alphanumerischen oder grafischen Bildschirm, ein vorderes Beleuchtungs-Subsystem, das aus einem Scheinwerferlicht (17) besteht, basierend auf Lichtstrahlern mit starker Leuchtkraft, eine Anordnung von wiederaufladbaren Batterien, eine Batterieaufladestation, und ein Subsystem zur Regulierung der Spannungsversorgung, und ein Subsystem zur Datenübertragung inkorporiert,
eine hintere Einheit (40) zur Warnung und Signalisierung und zur Erfassung von Parametern, die angezeigt werden sollen, die aus einem Mikrocontroller (3), einer Anordnung von magnetischen Sensoren, einem akustischen Warn-Subsystem, das aus einem piezoelektrischen Lautsprecher (4) und seinem verbundenen Antriebskreislauf gebildet ist, einem Leuchtbrems- und Blinkerwarn-Subsystem, einem visuellen hydraulischen Warn-Subsystem über Farbe, einer Anordnung aus wiederaufladbaren Batterien, einer Batterieaufladestation, und aus einem Subsystem zur Regulierung der Spannungsversorgung, und aus einem Subsystem zur Datenübertragung besteht, wobei die vordere Einheit (2) von dem Benutzer gesteuert wird und den Blinker den Symbolausdruck, die Hupenbetätigung und die Konfigurationsbefehle zu der hinteren Einheit (40) sendet, und dies wiederum sendet den Zähler der Pedaltrittzeit und die Drehung des hinteren Rades zu der vorderen Einheit (2), wobei der Mikrocontroller (3) über Verbindungen zu einem HF-Block (4), zu einem Ventilantriebskreislauf (7), zu einem Linksschalter (8), zu einem Bremslicht (9), zu einem Rechtsschalter (10), zu einem Inputzähler (14), zu einem magnetischen Pedaltrittsensor (13), zu einem magnetischen Radsensor (12), zu einem magnetischen Bremssensor (11) über eine Verbindung (15) verfügt, wobei der piezoelektrische Lautsprecher (5) durch Outputs (6) mit dem Mikrocontroller (3) verbunden ist, wobei der Mikrocontroller (3) ebenso über Verbindungen zu einem Oximeter (16), zu einem GPS/GSM-Block (23) zu einer vorderen Beleuchtung (17), zu einer Tastatur (18), zu einem Zeitmesser (21), zu einem Gradientensensor (22) und zu einem Richtungssensor (20), zu einem LCD-Bildschirm (19) verfügt.

2. Bordeigene computerintegrierte Vorrichtung für Fahrräder, zur Beleuchtung, zur Signalisierung und zum Drucken von Straßensymbolen nach Anspruch 1, **dadurch gekennzeichnet, dass** der Rumpf der hinteren Einheit (40) bernsteinfarbene Dioden (28) und (30) inkorporiert, unter denen rote Dioden (209) positioniert sind, die ein transluzentes Material (22) und eine Warnklingel (23) haben, wobei der in dem Rumpf (2) inkorporierte Bildschirm (19) Tasten oder Knöpfe (34) auf seinem Perimeter hat, um den Linksblinker zu betätigen, und Menubrowsingtasten oder -knöpfe (37), wobei es Knöpfe (36) für den Rechtsblinker gibt, ebenso wie einen Farbsymbolknopf (35), und Elemente zur Befestigung oder zur Halterung (28) und (28') an dem Fahrrad (1).

3. Bordeigene computerintegrierte Vorrichtung für Fahrräder, zur Beleuchtung, zur Signalisierung und zum Drucken von Straßensymbolen nach Anspruch 1, **dadurch gekennzeichnet, dass** die Übertragung zwischen der vorderen (2) und der hinteren (40) Einheit durch Drähte durchgeführt wird, und **dadurch**, **dass** eine der Einheiten, entweder die vordere (2) oder die hintere (40), nicht mit Batterien ausgestattet ist, und auch nicht mit einem Auflade- und Regulierungskreislauf, aber sie wird von Batterien von der anderen Einheit mit Energie versorgt.

4. Bordeigene computerintegrierte Vorrichtung für Fahrräder, zur Beleuchtung, zur Signalisierung und zum Drucken von Straßensymbolen nach Anspruch 1, **dadurch gekennzeichnet, dass** die Übertragung zwischen der vorderen (2) und der hinteren (4) Einheit drahtlos ist, über Infrarot-, HF- oder Ultraschall-Sender und Empfänger, und es wird ein Gerätecode zu dem Datenpaket-Header hinzugefügt, um ein angrenzendes Gerät daran zu hindern, die Informationen aufzunehmen, die von einem anderen Gerät zu eigenen Zwecken ausgestrahlt werden.

5. Bordeigene computerintegrierte Vorrichtung für Fahrräder, zur Beleuchtung, zur Signalisierung und zum Drucken von Straßensymbolen nach Anspruch 1, **dadurch gekennzeichnet, dass** das hydraulische System zum Symboldrucken auf der Straße, das nach einer vorher bestimmten Zeit verschwindet, mit dem Rest der Erfindung abnehmbar montiert ist, wobei das hydraulische System aus drei luftdichten Tanks, einer für Luft, ein anderer für Farbe und noch ein anderer für Reagenzien, sowie aus Leitungen, aus einem Elektroventil und aus einer Sprühdüse gebildet ist.

6. Bordeigene computerintegrierte Vorrichtung für Fahrräder, zur Beleuchtung, zur Signalisierung und zum Drucken von Straßensymbolen nach Anspruch 1, **dadurch gekennzeichnet, dass** die hintere Einheit (40) zwei Einheiten besitzt, von denen eine zur Parametererfassung und die andere für den Empfang und die Ausführung der von der vorderen Einheit (2) gesendeten Befehle vorgesehen ist.

7. Bordeigene computerintegrierte Vorrichtung für Fahrräder, zur Beleuchtung, zur Signalisierung und zum Drucken von Straßensymbolen nach Anspruch 1, **dadurch gekennzeichnet, dass** die benutzten wiederaufladbaren Batterien Nickel-Metall-Hybrid-Batterien sind, wobei der Stromregulierungskreislauf in der Lage ist, gleichermaßen sowohl die besagten wiederaufladbaren Batterien als auch herkömmliche, nicht wiederaufladbare Batterien aufzunehmen.

8. Bordeigene computerintegrierte Vorrichtung für Fahrräder, zur Beleuchtung, zur Signalisierung und zum Drucken von Straßensymbolen nach Anspruch 1, **dadurch gekennzeichnet, dass** die benutzten wiederaufladbaren Batterien Lithium-Ionen-Batterien sind, mit einem Auflade- und Regulierungskreislauf, der speziell für diese Art von Batterien ausgelegt ist, wobei die Einheit von einem Auflade-Subsystem gebildet wird, und die Batterie ein geringeres Gewicht und Volumen besitzt.

9. Bordeigene computerintegrierte Vorrichtung für Fahrräder, zur Beleuchtung, zur Signalisierung und zum Drucken von Straßensymbolen nach Anspruch 6, **dadurch gekennzeichnet, dass** die Variante der drahtlosen Ausführungsform, bei der die hintere Einheit in physischer Weise in zwei Einheiten unterteilt ist, zweckmäßigerweise für die Erfassung der Pedaltrittquote und der Drehgeschwindigkeit des hinteren Rades und zur drahtlosen Übertragung zu der vorderen Einheit (2) zur Anzeige auf dem Bildschirm benutzt wird.

## Revendications

1. Dispositif intégré d'éclairage, de signalisation et d'impression de pictogramme de chaussée assisté par ordinateur pour bicyclettes, ledit dispositif comportant une bicyclette assistée par ordinateur associée à un système de sécurité par avertissement et signalisation acoustiques et visuels, comprenant :
- une unité de contrôle avant principale située sur le guidon d'une bicyclette (1), qui comporte un microcontrôleur (3), un clavier (18), un écran numérique (19), alphanumérique ou graphique, un sous-système d'éclairage avant configuré par une lampe (17), basé sur des émetteurs de lumière de forte luminosité, un assemblage de piles rechargeables, un sous-système de réglage du rechargement des piles et de la tension d'alimentation, et un sous-système de transmission des données ;
- une unité arrière (40) pour l'avertissement et la signalisation et la capture des paramètres à afficher, qui se compose d'un microcontrôleur (3), d'un réseau de capteurs magnétiques, d'un sous-système d'avertissement acoustique formé d'un haut-parleur piézoélectrique (4) et de son circuit de pilotage associé, d'un frein lumineux et d'un sous-système d'avertissement avec frein et indicateur lumineux, d'un sous-système hydraulique d'avertissement visuel par coloriage, d'un assemblage de piles rechargeables, d'un sous-système de réglage de chargement de piles et de tension d'alimentation et d'un sous-système de transmission de données ; l'unité avant (2) étant contrôlée par l'utilisateur et envoyant l'indicateur, l'impression du pictogramme, l'activation du klaxon et les commandes de configuration à l'unité arrière (40) et cette dernière, à son tour, envoie le recueil de données du temps de pédalage et de la rotation de la roue arrière à l'unité avant (2), le microcontrôleur (3) ayant des connexions avec un bloc RF (4), un circuit de pilotage à valve (7), un commutateur gauche (8), une lumière de frein (9), un commutateur droit (10), une entrée de compteur (14), un capteur de pédalage magnétique (13), un capteur de roue magnétique (12), un capteur de frein magnétique (11) via une connexion (15), le haut-parleur piézoélectrique (5) étant connecté par des sorties (6) au microcontrôleur (3), le microcontrôleur (3) ayant aussi des connexions avec un oxymètre (16), un bloc GPS/GSM (23), l'éclairage avant (17), un clavier (18), un chronomètre (21), un capteur de pente (22) et un capteur de butée (20), un écran à cristaux liquides (19).

2. Dispositif intégré d'éclairage, de signalisation et d'impression de pictogramme de chaussée assisté par ordinateur pour bicyclettes, selon la revendication 1, **caractérisé en ce que** le corps de l'unité arrière (40) comporte les diodes de couleur ambre (28) et (30) parmi lesquelles les diodes de couleur rouge (209) sont positionnées, possédant un matériau translucide (22) et un avertisseur sonore (23), l'écran (19), intégré au corps (2), disposant de touches ou de boutons (34) sur son périmètre pour activer l'indicateur gauche, et des touches ou des boutons de recherche de menu (37), étant présents à cet emplacement des boutons (36) pour l'indicateur droit, ainsi qu'un bouton de pictogramme coloré (35), et des éléments de fixation ou de maintien (28) et (28') à la bicyclette (1).

3. Dispositif intégré d'éclairage, de signalisation et d'impression de pictogramme de chaussée assisté par ordinateur pour bicyclettes, selon la revendication 1, **caractérisé en ce que** la transmission entre les unités avant (2) et arrière (40) s'effectue au moyen de fils et, que l'une des deux unités, l'unité avant (2) ou l'unité arrière (40), n'est pourvue ni de piles ni de circuit de chargement et de réglage, mais qu'elle est alimentée par des piles de l'autre unité.

4. Dispositif intégré d'éclairage, de signalisation et d'impression de pictogramme de chaussée assisté par ordinateur pour bicyclettes, selon la revendication 1, **caractérisé en ce que** la transmission entre les unités avant (2) et arrière (4) est sans fil, par infrarouge, émetteurs et receveurs RF ou à ultrasons et **en ce qu'**un code d'équipement est ajouté à l'en-tête du paquet de données pour éviter à l'équipement adjacent de prendre les informations rayonnées par un autre équipement comme étant les siennes propres.

5. Dispositif intégré d'éclairage, de signalisation et d'impression de pictogramme de chaussée assisté par ordinateur pour bicyclettes, selon la revendication 1, **caractérisé en ce que** le système hydraulique pour l'impression du pictogramme sur la chaussée, qui disparaît après une période prédéterminée est assemblé sur le reste de l'invention de façon à pouvoir être retiré, le système hydraulique étant constitué de trois réservoirs hermétiques, l'un d'air, un autre de couleur et un autre de réactif, ainsi que de conduits, d'une électrovalve et d'une buse de pulvérisation.

6. Dispositif intégré d'éclairage, de signalisation et d'impression de pictogramme de chaussée assisté par ordinateur pour bicyclettes, selon la revendication 1, **caractérisé en ce que** l'unité arrière (40) possède deux unités, l'une pour la capture de paramètres et l'autre pour recevoir et exécuter les commandes envoyées par l'unité avant (2).

7. Dispositif intégré d'éclairage, de signalisation et d'impression de pictogramme de chaussée assisté par ordinateur pour bicyclettes, selon la revendication 1, **caractérisé en ce que** les piles rechargeables utilisées sont des piles hybrides nickel-métal, le circuit de réglage d'alimentation étant capable d'admettre tout aussi bien lesdites piles rechargeables que les piles traditionnelles non rechargeables.

8. Dispositif intégré d'éclairage, de signalisation et d'impression de pictogramme de chaussée assisté par ordinateur pour bicyclettes, selon la revendication 1, **caractérisé en ce que** les piles rechargeables utilisées sont des piles ion-lithium, avec un chargement et un circuit de réglage spécifiques à ce type de pile, l'unité étant constituée du sous-système de chargement et de la pile de moindres poids et volume.

9. Dispositif intégré d'éclairage, de signalisation et d'impression de pictogramme de chaussée assisté par ordinateur pour bicyclettes, selon la revendication 6, **caractérisé en ce que** la variante de la forme de réalisation sans fil où l'unité arrière est physiquement scindée en deux unités, est utilisée de façon adéquate pour capturer l'allure de pédalage et la vitesse de rotation de la roue arrière et par une transmission sans fil à l'unité avant (2) à afficher sur l'écran.
